# EUROPÄISCHE PATENTSCHRIFT

(11) **EP 3 069 037 B1**
(45) Veröffentlichungstag und Bekanntmachung des Hinweises auf die Patenterteilung: **13.12.2017**
(21) Anmeldenummer: 14790502.0
(22) Anmeldetag: 02.10.2014
(51) Int. Cl.: F16D 13/75

(54) **KUPPLUNGSAGGREGAT**
CLUTCH ASSEMBLY
ENSEMBLE EMBRAYAGE

(30) Priorität: 13.11.2013 DE 102013223097
(43) Veröffentlichungstag der Anmeldung: 21.09.2016
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2014/200531
(87) Internationale Veröffentlichungsnummer: WO 2015/070848

(56) Entgegenhaltungen:
- WO-A1-2008/058508
- DE-A1-102011 102 261
- DE-A1-102013 200 552

## Beschreibung

Die Erfindung betrifft ein Kupplungsaggregat, insbesondere eine Doppelkupplung, mit dessen Hilfe eine Antriebswelle eines Kraftfahrzeugmotors mit mindestens einer Getriebeeingangswelle eines Kraftfahrzeuggetriebes gekuppelt werden kann.

Aus WO 2008/058508 A1 ist ein als Doppelkupplung aus gestaltetes Kupplungsaggregat mit zwei Reibungskupplungen bekannt, bei denen ein verschleißbedingter Fehlabstand einer Anpressplatte zu einer Gegenplatte über eine weggesteuerte Nachstelleinrichtung kompensiert werden kann. Die Nachstelleinrichtung weist einen an einer Gegenrampe eines Kupplungsgehäuseteils abgleitenden Sensierring auf, der in Umfangsrichtung mit einer Federkraft einer Zugfeder relativ zu dem Kupplungsgehäuseteil beaufschlagt ist. Der Sensierring wird mit Hilfe einer mit dem Kupplungsgehäuseteil vernieteten Klemmfeder reibschlüssig gegen eine als Tellerfeder ausgestalteten Hebelfeder zum axialen Bewegen der Anpressplatte relativ zur Gegenplatte arretiert. Zwischen der Anpressplatte und der Gegenplatte kann eine mit Reibbelägen versehene Kupplungsscheibe reibschlüssig verpresst werden, um ein Drehmoment zu übertragen. Bei einem Verschleiß der Reibbeläge erhöht sich der Hubweg der Anpressplatte, wodurch die Tellerfeder einen entsprechend großen Hub zum Schließen der Reibungskupplung ausführen muss. Die ringförmig ausgestaltete Klemmfeder ist mit der Tellerfeder gekoppelt, so dass die Tellerfeder bei einem entsprechend großen Hub der Tellerfeder die Klemmfeder elastisch von dem Sensierring weg biegt, wodurch die Klemmkraft der Klemmfeder auf den Sensierring reduziert wird oder sogar die Klemmfeder von dem Sensierring abheben kann. Bei einem ein tolerierbares Ausmaß übersteigenden Verschleiß ist der Hub der Tellerfeder so groß, dass der Sensierring die reibschlüssig aufgebrachte Klemmkraft der Klemmfeder überwinden kann, wodurch der Sensierring von der von der Zugfeder aufgebrachten Federkraft in Umfangsrichtung um einen Winkelbetrag verdreht wird. Der in axialer Richtung rampenförmig ausgestaltete Sensierring gleitet an der Gegenrampe des Kupplungsgehäuseteils ab, wodurch sich der axiale Abstand vergrößert bis wieder die Klemmkraft der elastisch von der Tellerfeder weggebogenen Klemmfeder ausreicht, um den Sensierring reibschlüssig an einer weiteren Bewegung in Umfangsrichtung zu hindern. Bei einem Öffnen der Reibungskupplung kann durch den verdrehten Sensierring die Tellerfeder an einem in axialer Richtung verschobenen Punkt an dem Sensierring anschlagen, so dass die Tellerfeder von einem Nachstellring zum Nachstellen des verschleißbedingten Fehlabstands abhebt oder zumindest eine Klemmkraft auf den Nachstellring reduziert. Der Nachstellring ist ebenfalls in Umfangsrichtung mit einer Federkraft beaufschlagt, so dass der in axialer Richtung rampenförmige Nachstellring an einer entsprechenden Gegenrampe der Anpressplatte abgleiten kann bis die von der Tellerfeder bereitgestellte Klemmkraft wieder ausreicht ein weiteres Verdrehen des Nachstellrings zu verhindern. Der Nachstellring kann dadurch in axialer Richtung einen größeren Abstand zwischen der Tellerfeder und der Anpressplatte überbrücken, wodurch der verschleißbedingte Fehlabstand der Anpressplatte zur Gegenplatte nachgestellt ist und die Tellerfeder mit einem entsprechend geringeren Hub die Anpressplatte auf die Gegenplatte zu bewegen kann. Nachstelleinrichtungen mit einem derartigen Betätigungsprinzip werden nachfolgend auch als "TAC-2VR" bezeichnet.

Es besteht ein ständiges Bedürfnis Kupplungsaggregate mit Verschleißnachstellung kostengünstig herstellen zu können.

Die DE 10 2013 200 552 A1 und die DE 10 2011 102 261 A1 offenbaren Doppelkupplungen mit Nachstelleinrichtungen. Es ist die Aufgabe der Erfindung Maßnahmen aufzuzeigen, die ein kostengünstiges Kupplungsaggregat mit Verschleißnachstellung ermöglichen.

Die Lösung der Aufgabe erfolgt erfindungsgemäß durch ein Kupplungsaggregat mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Kupplungsaggregat, insbesondere Doppelkupplung, zum Kuppeln einer Antriebswelle eines Kraftfahrzeugmotors mit mindestens einer Getriebeeingangswelle eines Kraftfahrzeuggetriebes vorgesehen mit einem Kupplungsgehäuse zum Einleiten oder Ausleiten eines Drehmoments, einer von dem Kupplungsgehäuse ausgebildeten Gegenplatte, einer relativ zur Gegenplatte axial verlagerbaren Anpressplatte zum reibschlüssigen Verpressen einer Kupplungsscheibe zwischen der Gegenplatte und der Anpressplatte, einem von einem, insbesondere hydraulischen, Betätigungssystem axial verlagerbaren Betätigungselement zum Verlagern der Anpressplatte, wobei das Betätigungselement insbesondere als im Wesentlichen starrer Betätigungstopf zur im Wesentlichen rein axialen Verlagerung zwischen einer Offenstellung und einer Schließstellung ausgestaltet ist, einer Nachstelleinrichtung zum Nachstellen eines verschleißbedingten Fehlabstands der Anpressplatte zur Gegenplatte, wobei die Nachstelleinrichtung genau einen unmittelbar oder mittelbar an dem Kupplungsgehäuse über ein Rampensystem abgestützten und in Umfangsrichtung mit einer Nachstellkraft vorgespannten Rampenring und eine unmittelbar oder mittelbar mit dem Kupplungsgehäuse verbundene Klemmfeder zum bewegungsfesten Verklemmen des Rampenrings mit Hilfe einer von der Klemmfeder aufgebrachten Klemmkraft, aufweist, wobei das Betätigungselement oder die Anpressplatte in der Offenstellung an dem Rampenring abgestützt ist und bei einem hinreichend großen Hubweg von der Offenstellung in die Schließstellung an der Klemmfeder zur Reduzierung der Klemmkraft auf den Rampenring anschlägt.

Da das Betätigungselement bei einer Betätigung des Kupplungsaggregats nicht um einen Schwenkpunkt verschwenkt wird, sondern im Wesentlichen als Ganzes in axialer Richtung verschoben wird, ergibt sich eine direkt betätigte Reibungskupplung, bei welcher abgesehen von einer elastischen Verbiegung des Betätigungselements im Wesentlichen keine hebelbedingte Übersetzung von Betätigungskraft und Betätigungsweg erfolgt. Durch die fehlende Schwenkbewegung des Betätigungselements ist es nicht erforderlich das Betätigungselement während der axialen Verlagerung an einem Schwenkpunkt abzustützen. Dies ermöglicht es im Vergleich zu einem Kupplungsaggregat nach dem Prinzip der "TAC-2VR" den Sensierring als Nachstellring zu verwenden und dadurch einen Rampenring einzusparen. Die Nachstelleinrichtung weist dadurch im Vergleich zu einem Kupplungsaggregat nach dem Prinzip der "TAC-2VR" nicht zwei verdrehbare Rampenringe, sondern nur genau einen verdrehbaren Rampenring auf. Bei einer Betätigung, insbesondere einem Schließen, des Kupplungsaggregats kann bei einem ein tolerierbares Ausmaß übersteigenden Verschleiß von Reibbelägen die Klemmkraft der Klemmfeder reduziert werden, so dass der zum Betätigungselement und zur Anpressplatte beabstandete Rampenring sich aufgrund der Vorspannung in Umfangsrichtung verdrehen kann, um die axiale Gesamterstreckung des Rampensystems zu erhöhen. Bei einer entgegen gesetzten Bewegung, insbesondere in Richtung der Offenstellung, kann das Betätigungselement oder die Anpressplatte früher an dem Rampenring anschlagen, so dass sich ein, insbesondere dem im Neuzustand entsprechenden ursprünglichen, nachgestellter Hubweg der Anpressplatte zwischen der nachgestellten Offenstellung und der Schließstellung ergibt. Das Betätigungselement und insbesondere ein an dem Betätigungselement angreifender Kolben des Betätigungssystems können dadurch bei einer fehlenden Betätigungskraft nicht mehr in die dem Neuzustand entsprechende Ausgangsstellung zurückgelangen. Stattdessen ist das Betätigungselement und insbesondere der an dem Betätigungselement angreifende Kolben des Betätigungssystems in einer axialen Stellung positioniert, die um den Betrag des bereits erfolgten Verschleißes zur ursprünglichen Ausgangsstellung im Neuzustand axial versetzt ist. Über den Verschleißbereich von Reibbelägen der Reibungskupplung kann der Hubweg der Anpressplatte im Wesentlichen konstant gehalten werden, wobei sich lediglich die Ausgangslage verändert. Ein Nachstellpunkt, an dem an der Klemmfeder angeschlagen wird, kann ebenfalls entsprechend zur Verlagerung der Ausgangslage mitwandern. Das Kupplungsaggregat kann im Übrigen insbesondere wie in WO 2008/058508 A1 dargestellt aus- und weitergebildet sein, auf deren Inhalt hiermit als Teil der Erfindung Bezug genommen wird. Da das Betätigungselement nicht um einen Schwenkpunkt verschwenkt wird, sondern im Wesentlichen rein axial verschoben wird, ist es möglich die Nachstelleinrichtung mit nur genau einem verdrehbaren Rampenring auszugestalten, so dass durch den einfacheren konstruktiven Aufbau und der geringen Bauteileanzahl ein kostengünstiges Kupplungsaggregat mit Verschleißnachstellung ermöglicht ist.

Die Erfindung betrifft ferner ein Kupplungsaggregat, insbesondere Doppelkupplung, zum Kuppeln einer Antriebswelle eines Kraftfahrzeugmotors mit mindestens einer Getriebeeingangswelle eines Kraftfahrzeuggetriebes mit einem Kupplungsgehäuse zum Einleiten oder Ausleiten eines Drehmoments, einer von dem Kupplungsgehäuse ausgebildeten Gegenplatte, einer relativ zur Gegenplatte axial verlagerbaren Anpressplatte zum reibschlüssigen Verpressen einer Kupplungsscheibe zwischen der Gegenplatte und der Anpressplatte, einem von einem, insbesondere hydraulischen, Betätigungssystem antreibbaren Betätigungselement zum Verlagern der Anpressplatte, wobei das Betätigungselement insbesondere als im Wesentlichen starrer Betätigungstopf zur im Wesentlichen rein axialen Verlagerung zwischen einer Offenstellung und einer Schließstellung ausgestaltet ist, einer Nachstelleinrichtung zum Nachstellen eines verschleißbedingten Fehlabstands der Anpressplatte zur Gegenplatte, wobei die Nachstelleinrichtung genau einen unmittelbar oder mittelbar an der Anpressplatte oder an dem Betätigungselement über ein Rampensystem abgestützten und in Umfangsrichtung mit einer Nachstellkraft vorgespannten Rampenring und eine unmittelbar oder mittelbar mit der Anpressplatte oder mit dem Betätigungselement verbundene Klemmfeder zum bewegungsfesten Verklemmen des Rampenrings mit Hilfe einer von der Klemmfeder aufgebrachten Klemmkraft, aufweist, wobei das Kupplungsgehäuse in der Offenstellung an dem Rampenring abgestützt ist und bei einem hinreichend großen Hubweg von der Offenstellung in die Schließstellung an der Klemmfeder zur Reduzierung der Klemmkraft auf den Rampenring anschlägt.

Bei dem zuvor beschriebenen Kupplungsaggregat war die Nachstelleinrichtung bei einer Verlagerung der Anpressplatte feststehend und ein von dem Betätigungselement oder der Anpressplatte ausgestalteter Anschlag zum Anschlagen an der Klemmfeder mitbewegt, während bei dem hier beschriebenen Kupplungsaggregat im Wege der kinematischen Umkehr die Nachstelleinrichtung bei einer Verlagerung der Anpressplatte mitbewegt und ein von dem Kupplungsgehäuse ausgebildeter Anschlag zum Anschlagen an der Klemmfeder feststehend ausgeführt ist. Das hier beschriebene Kupplungsaggregat kann im Übrigen wie bei dem zuvor beschriebenen Kupplungsaggregat aus- und weitergebildet sein. Die nachfolgend beschriebenen Merkmale können Weiterbildungen beider erfindungsgemäßen Kupplungsaggregate sein.

Der Rampenring kann in axialer Richtung abstehende Rampen aufweisen, die an korrespondierenden Gegenrampen in Umfangsrichtung abgleiten können. Die Rampe und die Gegenrampe bilden das Rampensystem aus, deren Erstreckung in axialer Richtung sich bei einer Relativdrehung der Rampe zur Gegenrampe ändern kann. Die auf den Rampenring aufgebrachte Nachstellkraft kann durch eine vorgespannte als Druckfeder ausgestaltete Nachstellfeder bereitgestellt werden, die beispielsweise als Schraubenfeder, Spiralfeder, Schenkelfeder oder Rollfeder ausgestaltet ist. Es ist auch möglich die Nachstellfeder als Zugfeder auszugestalten. Die Klemmfeder ist insbesondere als eine ringförmige oder bogenförmige Feder ausgestaltet, die aus einem Federstahlblech hergestellt ist. Die Klemmfeder kann beispielsweise in Umfangsrichtung geschlossen oder nur in Umfangsrichtung verlaufenden Teilbereichen an dem Rampenring anliegen. Die Klemmfeder kann nach radial innen oder nach radial außen abstehende Befestigungsansätze aufweisen, über welche die Klemmfeder mit dem die Gegenrampe zum Rampenring ausbildenden Bauteil befestigt werden kann. Die Klemmfeder kann nach radial innen oder nach radial außen abstehende Anschlagansätze aufweisen, an dem das relativ zu dem die Gegenrampe ausbildenden Bauteil axial verlagerbare Bauteil anschlagen kann, um die von der Klemmfeder auf den Rampenring aufgebrachte Klemmkraft zu reduzieren und/oder die Klemmfeder von dem Rampenring abheben zu lassen. Das Betätigungselement kann im Wesentlichen vergleichbar zu einem Topf ausgestaltet sein, wodurch das Betätigungselement besonders starr ausgebildet sein kann. Die Klemmfeder kann aus einem einzelnen umlaufenden Federbauteil gebildet sein oder aus einem oder mehreren auf dem Umfang der Reibungskupplung verteilten Federelementen ausgebildet sein. Die Federelemente können sich hierbei radial und/oder tangential zur Drehachse der Reibungskupplung erstrecken, um eine Federwirkung in axialer Richtung bereitzustellen. Einzelne Federelemente können als Blattfeder ausgestaltet sein. Das Betätigungselement ist beispielsweise als ringförmiger Hohlzylinder ausgestaltet, bei dem eine Stirnseite geschlossen ausgeführt ist. Das Betätigungselement kann hierbei jedoch im Bereich des Hohlzylinders und/oder der geschlossenen Stirnseite mindestens eine Öffnung aufweisen. Insbesondere weist die geschlossene Stirnseite eine koaxiale Öffnung auf, an deren radial inneren Rand das Betätigungssystem angreifen kann. Alternativ kann das Betätigungselement Teil eines internen Hebelsystems sein. Beispielsweise ist das Betätigungselement als Hebelfeder ausgestaltet, die insbesondere zumindest teilweise als Tellerfeder ausgestaltet ist. Das Betätigungselement kann beispielsweise einen in Umfangsrichtung geschlossenen Tellerfederkörper aufweisen, von dem nach radial innen Federzungen abstehen können, an deren radial inneren Endbereichen das Betätigungssystem angreifen kann, um das Betätigungselement um einen in Umfangsrichtung linienförmig geschlossenen Schwenkpunkt zu verschwenken.

Insbesondere weist das Betätigungssystem einen Kolben zur axialen Bewegung der Anpressplatte mit Hilfe des als Betätigungstopf ausgestalteten Betätigungselements auf, wobei der Betätigungsweg des Kolbens im Wesentlichen dem Verschiebeweg der Anpressplatte entspricht. Dadurch wird eine direkt betätigte übersetzungsfreie Reibungskupplung ausgebildet. Ein Verschwenken des jeweiligen Betätigungstopfs findet nicht statt, so dass die entsprechenden Bauteile zum Ermöglichen eines Verschwenkens des jeweiligen Betätigungstopfs eingespart werden können. Unter der Annahme eines ideell starren Betätigungstopfes entspricht der Betätigungsweg des Kolbens genau dem Verschiebeweg der zugehörigen Anpressplatte. Der Verschiebeweg der jeweiligen Anpressplatte unterscheidet sich von dem Betätigungsweg des Kolbens somit lediglich um die Wegstrecke in axialer Richtung, um die der Betätigungstopf beim Betätigen der jeweiligen Kupplung elastisch gebogen wird.

Insbesondere ist ein hydraulisches Betätigungssystem zum Verlagern des Betätigungselements in axialer Richtung vorgesehen, wobei das Betätigungssystem einen in einem Zylinder geführten Kolben zum Einleiten einer von dem Betätigungssystem aufgebrachten Betätigungskraft in das Betätigungselement aufweist, wobei der Zylinder hydraulisch mit einer Ausgleichseinrichtung zum Druckausgleich innerhalb des Zylinders in einer nachgestellten Offenstellung kommuniziert. Nach einem Nachstellereignis, wenn der Rampenring sich in Umfangsrichtung verdreht hat, wird der Kolben insbesondere nicht in seine vorherige Ausgangslage zurück bewegt. Ein sich dadurch innerhalb des Zylinders einstellender Druck kann mit Hilfe der Ausgleichseinrichtung auf den für die Ausgangsstellung des Kolbens in dem Zylinder vorgesehenen Druck, insbesondere durch "Schnüffeln", angepasst werden. Hierzu kann die Ausgleichseinrichtung beispielsweise ein Ausgleichsvolumen aufweisen, das bei einem zu hohen Druck im Zylinder einen entsprechenden Volumenanteil eines für das Betätigungssystem verwendeten Hydraulikfluids aufnimmt und/oder bei einem zu niedrigen Druck im Zylinder einen entsprechenden Volumenanteil des Hydraulikfluids zuführt. Dadurch kann nach einem Nachstellereignis die Betätigungscharakteristik des Betätigungssystems im Wesentlichen konstant bleiben.

Vorzugsweise ist ein hydraulisches Betätigungssystem zum Verlagern des Betätigungselements in axialer Richtung vorgesehen, wobei das Betätigungssystem einen in einem Zylinder geführten Kolben zum Einleiten einer von dem Betätigungssystem aufgebrachten Betätigungskraft in das Betätigungselement über ein insbesondere als Schrägkugellager ausgebildetes Einrücklager aufweist, wobei das Betätigungssystem eine an einem den Zylinder ausbildenden Zylindergehäuse und dem Einrücklager abgestützte Vorlastfeder zum Drücken des Einrücklagers gegen das Betätigungselement aufweist. Mit Hilfe der Vorlastfeder kann sichergestellt werden, dass das Betätigungselement und der Kolben an dem Einrücklager mit einer Mindestkraft anliegen. Dadurch kann ein Klappern vermieden werden. Ferner kann ein Auseinanderfallen des Einrücklagers vermieden werden. Die Federkraft der Vorlastfeder ist insbesondere geringer als eine, insbesondere mit der Anpressplatte und dem Kupplungsgehäuse verbundenen Rückstellfeder, mit deren Hilfe die Anpressplatte bei einer nachlassenden oder fehlenden Betätigungskraft automatisch in eine definierte, insbesondere der Offenstellung entsprechenden, Ausgangsstellung zurück bewegt werden kann. Die Rückstellfeder kann insbesondere als Blattfeder ausgestaltet sein. Die Vorlastfeder kann beispielsweise als Schraubenfeder, Spiralfeder oder Tellerfederpaket ausgestaltet sein.

Besonders bevorzugt ist ein Betätigungssystem zum Verlagern des Betätigungselements in axialer Richtung vorgesehen, wobei das Kupplungsgehäuse, insbesondere ein getriebeseitiger Kupplungsdeckel des Kupplungsgehäuses, über ein Deckellager an dem Betätigungssystem gelagert ist, wobei das Kupplungsgehäuse auf einem Radius R_{D} an dem Deckellager anliegt und der Rampenring auf einem Radius R_{K} an dem relativ zum Rampenring verlagerbaren Betätigungselement oder an der relativ zum Rampenring verlagerbaren Anpressplatte oder an dem relativ zum Rampenring verlagerbaren Kupplungsgehäuse anschlagbar ist, wobei 1,00 ≤ R_{K}/R_{D} ≤ 2,00, insbesondere 1,05 ≤ R_{K}/R_{D} ≤ 1,40, vorzugsweise 1,08 ≤ R_{K}/R_{D} ≤ 1,20 und besonders bevorzugt 1,10 ≤ R_{K}/R_{D} ≤ 1,12 gilt. Die Nachstelleinrichtung und insbesondere der Rampenring kann dadurch in einem freien Bauraum vorgesehen werden, der besonders weit radial innen liegt. Dadurch ergibt sich für die Bauteile der Nachstelleinrichtung ein geringerer Durchmesser, der zu kleineren und kostengünstigeren Bauteilkomponenten mit einem geringeren Gesamtgewicht führen. Zusätzlich wird dadurch die Massenträgheit gegen Rotation reduziert, wodurch eine gute dynamische Stabilität und Funktionssicherheit erreicht werden kann. Ferner ist die Nachstelleinrichtung geringeren Auswirkungen von Taumel- oder Kippbewegungen ausgesetzt, wodurch das Risiko eines fehlerhaften Nachstellens reduziert werden kann. Alternativ kann das Kupplungsgehäuse, insbesondere ein getriebeseitiger Kupplungsdeckel des Kupplungsgehäuses, an einem Stützlager gelagert sein, wobei das Stützlager insbesondere an einer Getriebeeingangswelle eines Kraftfahrzeuggetriebes abgestützt sein kann, so dass die Nachstelleinrichtung besonders weit radial innen positioniert werden kann.

Insbesondere weist das Betätigungselement ein Sensieröffnung auf, wobei die Klemmfeder einen in axialer Richtung durch die Sensieröffnung hindurchragenden Steg aufweist, wobei von dem Steg in radialer Richtung ein Anschlag zum Anschlagen an einer von dem Rampenring weg weisenden Seite des Betätigungselements absteht, wobei insbesondere der Anschlag und der Steg eine Clip-artige Einführungsschräge ausbilden. Bei einem hinreichend großen verschleißbedingten Hubweg der Anpressplatte kann das Betätigungselement leicht an dem Anschlag der Klemmfeder anschlagen und den Anschlag mitnehmen, um die Klemmkraft der Klemmfeder zu reduzieren. Durch den durch die Sensieröffnung hindurchragenden Steg kann die Klemmfeder das Betätigungselement leicht hintergreifen. Durch die Einführungsschräge kann der Steg mit dem Anschlag bei der Montage an einem Rand der Sensieröffnung entlang gleiten, wodurch der Steg wegfedern kann. Nachdem der Anschlag vollständig durch die Sensieröffnung hindurch gelangt ist, kann der Steg zurückfedern, wodurch in der Art einer Clip-Verbindung eine verliersichere Verbindung erreicht ist. Es ist auch möglich, dass der Steg und/oder der Anschlag einstückig mit dem Betätigungselement ausgeführt sind und durch das Betätigungselement ausgeformt sein können oder der Steg und/oder der Anschlag als separates Bauteil mit dem Betätigungselement verbunden sind. Der Steg kann an der Klemmfeder vorbei reichen oder durch eine Öffnung der Klemmfeder hindurch ragen. Bei einem hinreichend großen Hubweg kann der Anschlag an der Klemmfeder hängen bleiben und den Rampenring entlasten. Insbesondere können mehrere Stege und/oder Anschläge und/oder Klemmfedern auf dem Umfang der Reibungskupplung angeordnet sein.

In einer bevorzugten Ausführungsform sind eine erste Reibungskupplung und einer zweite Reibungskupplung vorgesehen, wobei die erste Reibungskupplung eine von dem Kupplungsgehäuse ausgebildete erste Gegenplatte und eine von einem ersten Betätigungselement verlagerbare erste Anpressplatte und die zweite Reibungskupplung eine von dem Kupplungsgehäuse ausgebildete zweite Gegenplatte und eine von einem zweiten Betätigungselement verlagerbare zweite Anpressplatte aufweisen, wobei eine erste Nachstelleinrichtung zum Nachstellen eines verschleißbedingten Fehlabstands der ersten Anpressplatte zur ersten Gegenplatte und einer zweite Nachstelleinrichtung zum Nachstellen eines verschleißbedingten Fehlabstands der zweiten Anpressplatte zur zweiten Gegenplatte vorgesehen sind. Die jeweilige Reibungskupplung kann wie vorstehend beschrieben anhand des Kupplungsaggregats erläutert aus- und weitergebildet sein. Durch die zwei Reibungskupplungen kann das Kupplungsaggregat als Doppelkupplung ausgestaltet sein, mit dessen Hilfe eine Antriebswelle eines Kraftfahrzeugsmotors im Wesentlichen zugkraftunterbrechungsfrei mit einer ersten Getriebeeingangswelle und/oder einer zweiten Getriebeeingangswelle gekuppelt werden kann.

Die jeweiligen Anpressplatten und Gegenplatten sind insbesondere als separate funktionell getrennte Bauteile ausgestaltet, so dass für die Doppelkupplung ein so genanntes "Vier-Platten-Design" möglich ist, ohne den Bauraum signifikant zu erhöhen. Es ist auch möglich, dass die erste Gegenplatte und die zweite Gegenplatte durch unterschiedliche Axialseiten einer gemeinsamen Zentralplatte ausgebildet werden, wodurch sich eine Doppelkupplung nach dem sogenannten "Drei-Platten-Design" ergibt. Im Vergleich zu einer Doppelkupplung nach dem "Vier-Platten-Design" kann bei einer Doppelkupplung nach dem "Drei-Platten-Design" die erste Gegenplatte durch einen beispielsweise über einen insbesondere als Zweimassenschwungrad ausgestalteten Drehschwingungsdämpfer mit der Antriebswelle gekoppelten Mitnehmerring ersetzt sein, wobei insbesondere die erste Nachstelleinrichtung mit dem Mitnehmerring zusammenwirken kann. Der Mitnehmerring kann hierbei beispielsweise eine erste Gegenrampe für den ersten Rampenring oder einen ersten Anschlag für die erste Klemmfeder ausbilden.

Insbesondere wirken die erste Nachstelleinrichtung und die zweite Nachstelleinrichtung mit dem selben Bauteil des Kupplungsgehäuses zusammen. Die erste Nachstelleinrichtung und die zweite Nachstelleinrichtung, insbesondere der erste Rampenring und der zweite Rampenring, können beispielsweise koaxial zueinander angeordnet sein, wodurch sich ein geringer Bauraumbedarf und eine leichte Montage ergeben. Beispielsweise kann ein getriebeseitiger Kupplungsdeckel des Kupplungsgehäuses sowohl die erste Gegenrampe für den ersten Rampenring als auch die zweite Gegenrampe für den zweiten Rampenring ausbilden.

Vorzugsweise ist vorgesehen, dass das erste Betätigungselement eine erste Durchgangsöffnung zum Hindurchführen eines an dem zweiten Rampenring der zweiten Nachstelleinrichtung anschlagbaren zweiten Abstützsteg des zweiten Betätigungselements und/oder das zweite Betätigungselement eine zweite Durchgangsöffnung zum Hindurchführen eines an dem ersten Rampenring der ersten Nachstelleinrichtung anschlagbaren ersten Abstützsteg des ersten Betätigungselements aufweist. Mit Hilfe der Durchgangsöffnung kann das jeweils andere Betätigungselement das Betätigungselement mit der Durchgangsöffnung durchdringen. Dies erleichtert es beispielsweise beide Nachstelleinrichtungen, insbesondere beide Rampenringe, in einem gemeinsamen Axialbereich anzuordnen. Die Funktionsweise der Nachstelleinrichtungen ist dadurch nicht beeinträchtig, wenn das Betätigungselement mit der Durchgangsöffnung in axialer Richtung zwischen dem Betätigungselement mit dem Abstützsteg und der zugeordneten Nachstelleinrichtung angeordnet ist.

Besonders bevorzugt sind der erste Rampenring der ersten Nachstelleinrichtung und der zweite Rampenring der zweiten Nachstelleinrichtung an mindestens einem gemeinsamen Zentrierbolzen zentriert. Der Zentrierbolzen kann hierzu beispielsweise den einen Rampenring radial innen und den anderen Rampenring radial außen zentrieren. Vorzugsweise sind mindestens drei Zentrierbolzen vorgesehen, die insbesondere in Umfangsrichtung gleichmäßig verteilt und/oder auf einem gemeinsamen Radius angeordnet sind. Die Bauteileanzahl zum Zentrieren von zwei Rampenringe kann dadurch minimiert werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht einer ersten Ausführungsform eines Kupplungsaggregats,
- Fig. 2:: eine schematische Detailansicht des Kupplungsaggregats aus Fig. 1 in einer Offenstellung,
- Fig. 3:: eine schematische Detailansicht des Kupplungsaggregats aus Fig. 1 in einer Schließstellung ohne Nachstellereignis,
- Fig. 4:: eine schematische Detailansicht des Kupplungsaggregats aus Fig. 1 in einer Schließstellung bei einem Nachstellereignis,
- Fig. 5:: eine schematische Schnittansicht einer zweiten Ausführungsform eines Kupplungsaggregats und
- Fig. 6:: eine schematische Detailansicht des Kupplungsaggregats aus Fig. 5 in einer Offenstellung.

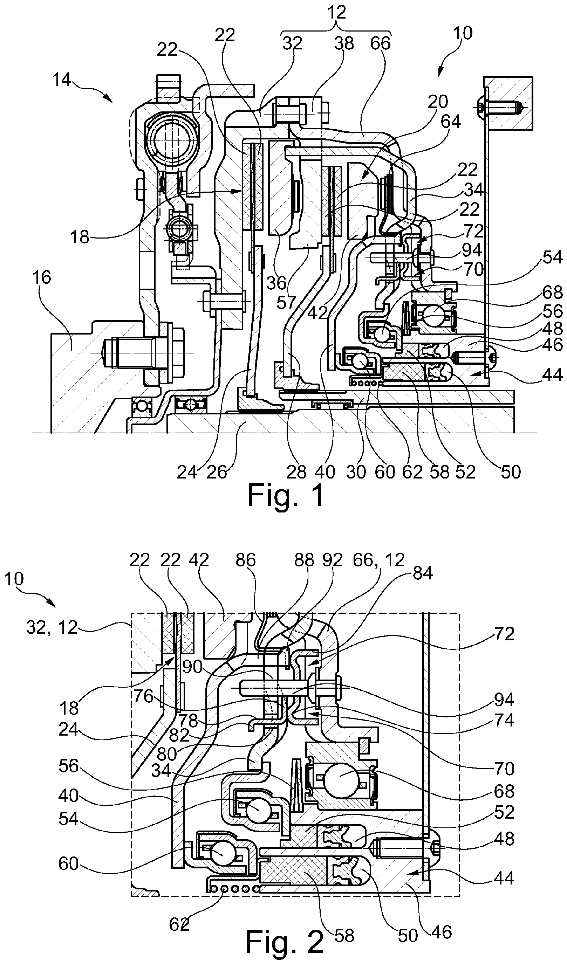

Das in Fig. 1 dargestellte Kupplungsaggregat 10 ist mit einem Kupplungsgehäuse 12 über einen als Zweimassenschwungrad ausgestalteten Drehschwingungsdämpfer 14 mit einer Antriebswelle 16 eines Kraftfahrzeugmotors verbunden. Das Kupplungsaggregat 10 ist als Doppelkupplung mit einer ersten Reibungskupplung 18 und einer zweiten Reibungskupplung 20 ausgestaltet, um die Antriebswelle 16 über eine verschleißbehaftete Reibbeläge 22 aufweisende erste Kupplungsscheibe 24 mit einer ersten Getriebeeingangswelle 26 eines Kraftfahrzeuggetriebes und über eine verschleißbehaftete Reibbeläge 22 aufweisende zweite Kupplungsscheibe 28 mit einer zweiten Getriebeeingangswelle 30 des Kraftfahrzeuggetriebes zu kuppeln. Die erste Reibungskupplung 18 weist eine erste Gegenplatte 32 und eine relativ von einem als starrer Betätigungstopf ausgestalteten ersten Betätigungselement 34 zur ersten Gegenplatte 32 axial verlagerbare erste Anpressplatte 36 auf, um die erste Kupplungsscheibe 24 bei einer über das erste Betätigungselement 34 eingeleiteten Betätigungskraft reibschlüssig zwischen der ersten Gegenplatte 32 und der ersten Anpressplatte 36 zu verpressen. Entsprechend weist die zweite Reibungskupplung 20 eine zweite Gegenplatte 38 und eine relativ von einem als starrer Betätigungstopf ausgestalteten zweiten Betätigungselement 40 zur zweiten Gegenplatte 38 axial verlagerbare zweite Anpressplatte 42 auf, um die zweite Kupplungsscheibe 28 bei einer über das zweite Betätigungselement 40 eingeleiteten Betätigungskraft reibschlüssig zwischen der zweiten Gegenplatte 38 und der zweiten Anpressplatte 42 zu verpressen.

Die jeweilige Betätigungskraft kann von einem als "CSC" (concentric slave cylinder) ausgestalteten hydraulischen Betätigungssystem 44 aufgebracht werden. Hierzu kann das Betätigungssystem 44 ein Zylindergehäuse 46 aufweisen, das einen radial äußeren ringförmigen ersten Zylinder 48 und einen radial inneren koaxial zum ersten Zylinder 48 vorgesehenen ringförmigen zweiten Zylinder 50 ausbildet. In dem ersten Zylinder 48 ist ein erster Kolben 52 in axialer Richtung geführt, der über ein erstes Einrücklager 54 gegen das erste Betätigungselement 34 drückt. Mit Hilfe einer als Tellerfederpaket ausgestalteten ersten Vorlastfeder 56, die an dem ersten Einrücklager 54 und dem Zylindergehäuse 46 abgestützt ist, kann eine minimale Anpresskraft auf das erste Betätigungselement 34 aufgebracht werden, die allerdings geringer als eine Rückstellkraft einer mit der ersten Anpressplatte 36 und dem Kupplungsgehäuse 12 verbundenen als Blattfeder ausgestalteten ersten Rückstellfeder 57 ist.

In dem zweiten Zylinder 50 ist ein zweiter Kolben 58 in axialer Richtung geführt, der über ein zweites Einrücklager 60 gegen das zweite Betätigungselement 40 drückt. Mit Hilfe einer als Schraubendruckfeder ausgestalteten zweiten Vorlastfeder 62, die an dem zweiten Einrücklager 60 und dem Zylindergehäuse 46 abgestützt ist, kann eine minimale Anpresskraft auf das zweite Betätigungselement 40 aufgebracht werden, die allerdings geringer als eine Rückstellkraft einer mit der zweiten Anpressplatte 42 und dem Kupplungsgehäuse 12 verbundenen als Blattfeder ausgestalteten zweiten Rückstellfeder 64 ist. Ferner ist ein mit der ersten Gegenplatte 32 und der zweiten Gegenplatte 38 verbundener getriebeseitiger Kupplungsdeckel 66 vorgesehen, der über ein Deckellager 68 an dem Zylindergehäuse 46 des Betätigungssystems 44 abgestützt ist. Die erste Gegenplatte 32, die zweite Gegenplatte 38 und der Kupplungsdeckel 66 bilden das Kupplungsgehäuse 12 aus.

Wie insbesondere in Fig. 2 dargestellt ist für die erste Reibungskupplung 18 eine erste Nachstelleinrichtung 70 und für die zweite Reibungskupplung 20 eine zweite Nachstelleinrichtung 72 vorgesehen. Die erste Nachstelleinrichtung 70 weist einen ersten Rampenring 74 auf, der an einer von dem Kupplungsdeckel 66 ausgebildeten ersten Gegenrampe in Umfangsrichtung abgleiten kann, um die axiale Erstreckung eines durch erste Rampen des ersten Rampenrings 74 und der ersten Gegenrampe gebildeten Rampensystems zu verändern. Der erste Rampenring 74 ist in Umfangsrichtung mit einer Nachstellkraft vorgespannt. An dem ersten Rampenring 74 liegt eine mit dem Kupplungsdeckel 66 verbundene erste Klemmfeder 76 an, deren Klemmkraft hoch genug ist ein Verdrehen des ersten Rampenring 74 reibschlüssig zu sperren. Die erste Klemmfeder 76 weist einen in axialer Richtung abstehenden Steg 78 auf, der durch eine in dem ersten Betätigungselement 34 vorgesehene Sensieröffnung 80 hindurchragt und das erste Betätigungselement 34 an einer von dem ersten Rampenring 74 weg weisenden Axialseite mit einem in radialer Richtung von dem Steg 78 abstehenden ersten Anschlag 82 hintergreift. Bei einer hinreichend großen Hubbewegung des ersten Betätigungselements 34 in axialer Richtung kann das erste Betätigungselement 34 an dem ersten Anschlag 82 anschlagen und dadurch die von der ersten Klemmfeder 76 auf den ersten Rampenring 74 aufgebrachte Klemmkraft reduzieren, so dass sich der erste Rampenring 74 in einem Nachstellereignis relativ zum Kupplungsdeckel 66 verdrehen kann. Der erste Kolben 52 kann dadurch um eine geringere Wegstrecke von der ersten Rückstellfeder 57 in den ersten Zylinder 50 eingefahren werden, da das erste Betätigungselement 34 vorher an dem ersten Rampenring 74 anschlägt, wodurch für eine nachfolgende Betätigung der ersten Reibungskupplung 18 im Wesentlichen der ursprüngliche Betätigungshub zum Schließen der ersten Reibungskupplung 18 wiederhergestellt ist.

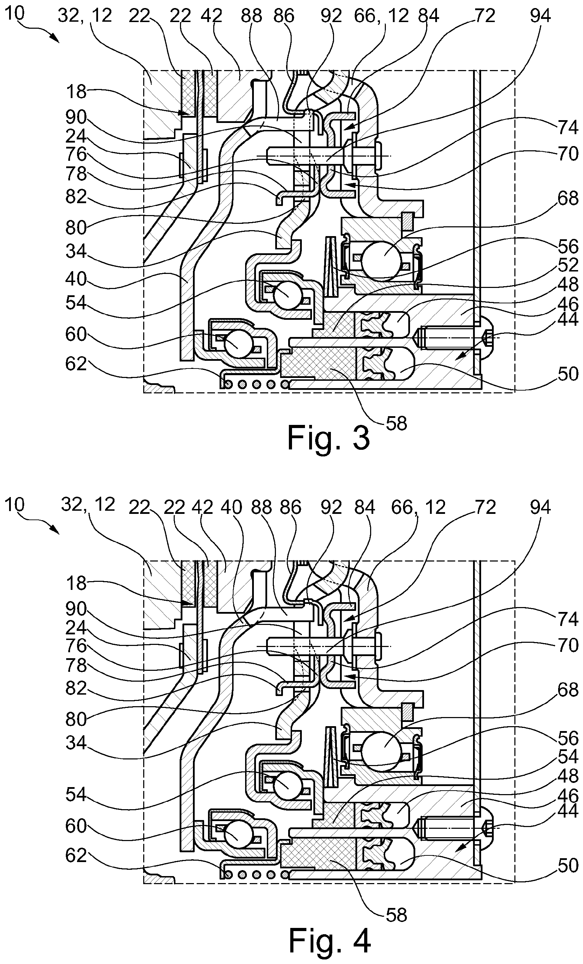

Die zweite Nachstelleinrichtung 72 weist einen zweiten Rampenring 84 auf, der an einer von dem Kupplungsdeckel 66 ausgebildeten zweiten Gegenrampe in Umfangsrichtung abgleiten kann, um die axiale Erstreckung eines durch zweite Rampen des zweiten Rampenrings 84 und der zweiten Gegenrampe gebildeten Rampensystems zu verändern. Der zweite Rampenring 84 ist in Umfangsrichtung mit einer Nachstellkraft vorgespannt. An dem zweiten Rampenring 84 liegt eine mit dem Kupplungsdeckel 66 verbundene zweite Klemmfeder 86 an, deren Klemmkraft hoch genug ist ein Verdrehen des zweiten Rampenring 84 reibschlüssig zu sperren. Das zweite Betätigungselement 40 weist einen in axialer Richtung abstehenden zweiten Abstützsteg 88 auf, der durch eine erste Durchgangsöffnung 90 im ersten Betätigungselement 34 bis zum zweiten Rampenring 84 geführt ist. Von dem zweiten Abstützsteg 88 steht in radialer Richtung ein zweiter Anschlag 92 ab. Wie in Fig. 3 exemplarisch am Beispiel der zweiten Reibungskupplung 20 gezeigt kann der zweite Anschlag 92 bei einer hinreichend großen Hubbewegung des zweiten Betätigungselements 40 in axialer Richtung an der zweiten Klemmfeder 86 anschlagen. Bei einer weiteren Hubbewegung des zweiten Betätigungselements 40 kann wie in Fig. 4 gezeigt die zweite Klemmfeder 86 von dem zweiten Betätigungselement 40 soweit mitgenommen werden, dass die zweite Klemmfeder 86 von dem zweiten Rampenring 84 abhebt oder zumindest ihre auf den zweiten Rampenring 84 aufgebrachte Klemmkraft reduziert. In dieser Nachstellsituation kann sich der zweite Rampenring 84 infolge der vorgespannten Nachstellkraft relativ zum Kupplungsdeckel 66 verdrehen und den für die zweite Anpressplatte 42 zwischen der Offenstellung und der Schließstellung vorgesehenen Betätigungshub auf die im Wesentlichen ursprüngliche Wegstrecke nachstellen.

In der dargestellten Ausführungsform des Kupplungsaggregats 10 sind der erste Rampenring 74 und der zweite Rampenring 84 an dem Kupplungsdeckel 66 abgestützt. Hierbei ist es möglich sowohl den ersten Rampenring 74 als auch den zweiten Rampenring 84 an mindestens einen mit dem Kupplungsdeckel 66 verbundenen Zentrierbolzen 94 zu zentrieren. Hierbei ist beispielsweise der erste Rampenring 74 radial außen und der zweite Rampenring 84 radial innen an dem Zentrierbolzen 94 gelagert.

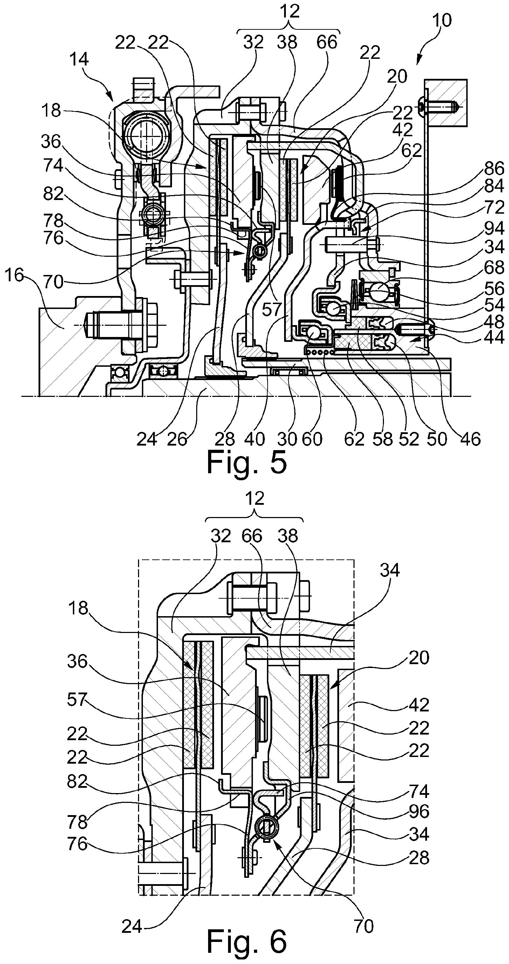

Bei der in Fig. 5 dargestellten Ausführungsform des Kupplungsaggregats 10 ist im Vergleich zu der in Fig. 1 dargestellten Ausführungsform des Kupplungsaggregats 10 die erste Nachstelleinrichtung 70 nicht am Kupplungsdeckel 66 sondern an der zweite Gegenplatte 38, die ebenfalls Teil des Kupplungsgehäuses 12 ist, abgestützt, wodurch radialer Bauraum eingespart werden kann. Wie in Fig. 6 dargestellt kann hierzu ein die ersten Gegenrampen ausbildendes Verbindungsstück 96 mit der zweiten Gegenplatte 38 verbunden werden. Mit dem Verbindungsstück 96 ist die erste Klemmfeder 76 vernietet, die den in Umfangsrichtung vorgespannten ersten Rampenring mit dem Verbindungsstück 96 verklemmt. In dieser Ausführungsform ist es nicht das erste Betätigungselement 34 sondern die erste Anpressplatte 36, die bei einem hinreichenden Verschleiß der Reibbeläge 22 der ersten Kupplungsscheibe 24 an dem ersten Anschlag 82 der Klemmfeder 76 anschlägt.

### Bezugszeichenliste

- 10: Kupplungsaggregat
- 12: Kupplungsgehäuse
- 14: Drehschwingungsdämpfer
- 16: Antriebswelle
- 18: erste Reibungskupplung
- 20: zweite Reibungskupplung
- 22: Reibbelag
- 24: erste Kupplungsscheibe
- 26: erste Getriebeeingangswelle
- 28: zweite Kupplungsscheibe
- 30: zweite Getriebeeingangswelle
- 32: erste Gegenplatte
- 34: erstes Betätigungselement
- 36: erste Anpressplatte
- 38: zweite Gegenplatte
- 40: zweites Betätigungselement
- 42: zweite Anpressplatte
- 44: Betätigungssystem
- 46: Zylindergehäuse
- 48: erster Zylinder
- 50: zweiter Zylinder
- 52: erster Kolben
- 54: erstes Einrücklager
- 56: erste Vorlastfeder
- 57: erste Rückstellfeder
- 58: zweiter Kolben
- 60: zweites Einrücklager
- 62: zweite Vorlastfeder
- 64: zweite Rückstellfeder
- 66: Kupplungsdeckel
- 68: Deckellager
- 70: erste Nachstelleinrichtung
- 72: zweite Nachstelleinrichtung
- 74: erster Rampenring
- 76: erste Klemmfeder
- 78: Steg
- 80: Sensieröffnung
- 82: erster Anschlag
- 84: zweiter Rampenring
- 86: zweite Klemmfeder
- 88: zweiter Abstützsteg
- 90: erste Durchgangsöffnung
- 92: zweiter Anschlag
- 94: Zentrierbolzen
- 96: Verbindungsstück

## Patentansprüche

1. Kupplungsaggregat, insbesondere Doppelkupplung, zum Kuppeln einer Antriebswelle (16) eines Kraftfahrzeugmotors mit mindestens einer Getriebeeingangswelle (26, 30) eines Kraftfahrzeuggetriebes, mit
einem Kupplungsgehäuse (12) zum Einleiten oder Ausleiten eines Drehmoments, einer von dem Kupplungsgehäuse (12) ausgebildeten Gegenplatte (32, 38),
einer relativ zur Gegenplatte (32, 38) axial verlagerbaren Anpressplatte (36, 42) zum reibschlüssigen Verpressen einer Kupplungsscheibe (24, 28) zwischen der Gegenplatte (32, 38) und der Anpressplatte (36, 42),
einem von einem, insbesondere hydraulischen, Betätigungssystem (44) axial verlagerbaren Betätigungselement (34, 40) zum Verlagern der Anpressplatte (36, 42), wobei das Betätigungselement (38, 40) insbesondere als im Wesentlichen starrer Betätigungstopf zur im Wesentlichen rein axialen Verlagerung zwischen einer Offenstellung und einer Schließstellung ausgestaltet ist,
einer Nachstelleinrichtung (70, 72) zum Nachstellen eines verschleißbedingten Fehlabstands der Anpressplatte (36, 42) zur Gegenplatte (32, 38), **dadurch gekennzeichnet, dass** die Nachstelleinrichtung (70, 72) genau einen unmittelbar oder mittelbar an dem Kupplungsgehäuse (12) über ein Rampensystem abgestützten und in Umfangsrichtung mit einer Nachstellkraft vorgespannten Rampenring (74, 84) und eine unmittelbar oder mittelbar mit dem Kupplungsgehäuse (12) verbundene Klemmfeder (76, 86) zum bewegungsfesten Verklemmen des Rampenrings (74, 84) mit Hilfe einer von der Klemmfeder (76, 86) aufgebrachten Klemmkraft, aufweist,
wobei das Betätigungselement (34, 40) oder die Anpressplatte (36, 42) in der Offenstellung an dem Rampenring (74, 84) abgestützt ist und bei einem hinreichend großen Hubweg von der Offenstellung in die Schließstellung an der Klemmfeder (76, 86) zur Reduzierung der Klemmkraft auf den Rampenring (74, 84) anschlägt.

2. Kupplungsaggregat, insbesondere Doppelkupplung, zum Kuppeln einer Antriebswelle (16) eines Kraftfahrzeugmotors mit mindestens einer Getriebeeingangswelle (36, 30) eines Kraftfahrzeuggetriebes, mit
einem Kupplungsgehäuse (12) zum Einleiten oder Ausleiten eines Drehmoments, einer von dem Kupplungsgehäuse (12) ausgebildeten Gegenplatte (32, 38),
einer relativ zur Gegenplatte (32, 38) axial verlagerbaren Anpressplatte (36, 42) zum reibschlüssigen Verpressen einer Kupplungsscheibe (24, 28) zwischen der Gegenplatte (32, 38) und der Anpressplatte (36, 42),
einem von einem, insbesondere hydraulischen, Betätigungssystem (44) antreibbaren Betätigungselement (34, 40) zum Verlagern der Anpressplatte (36, 42), wobei das Betätigungselement (34, 40) insbesondere als im Wesentlichen starrer Betätigungstopf zur im Wesentlichen rein axialen Verlagerung zwischen einer Offenstellung und einer Schließstellung ausgestaltet ist,
einer Nachstelleinrichtung (70, 72) zum Nachstellen eines verschleißbedingten Fehlabstands der Anpressplatte (36, 42) zur Gegenplatte (32, 38), **dadurch gekennzeichnet, dass** die Nachstelleinrichtung (70, 72) genau einen unmittelbar oder mittelbar an der Anpressplatte (36, 42) oder an dem Betätigungselement (34, 40) über ein Rampensystem abgestützten und in Umfangsrichtung mit einer Nachstellkraft vorgespannten Rampenring (74, 84) und eine unmittelbar oder mittelbar mit der Anpressplatte (36, 42) oder mit dem Betätigungselement (34, 40) verbundene Klemmfeder (76, 86) zum bewegungsfesten Verklemmen des Rampenrings (74, 84) mit Hilfe einer von der Klemmfeder (76, 86) aufgebrachten Klemmkraft, aufweist,
wobei das Kupplungsgehäuse (12) in der Offenstellung an dem Rampenring (74, 84) abgestützt ist und bei einem hinreichend großen Hubweg von der Offenstellung in die Schließstellung an der Klemmfeder (76, 86) zur Reduzierung der Klemmkraft auf den Rampenring (74, 84) anschlägt.

3. Kupplungsaggregat nach Anspruch 1 oder 2 **dadurch gekennzeichnet, dass** ein hydraulisches Betätigungssystem (44) zum Verlagern des Betätigungselements (34, 40) in axialer Richtung vorgesehen ist, wobei das Betätigungssystem (44) einen in einem Zylinder (48, 50) geführten Kolben (52, 58) zum Einleiten einer von dem Betätigungssystem (44) aufgebrachten Betätigungskraft in das Betätigungselement (34, 40) aufweist, wobei der Zylinder (48, 50) hydraulisch mit einer Ausgleichseinrichtung zum Druckausgleich innerhalb des Zylinders (48, 50) in einer nachgestellten Offenstellung kommuniziert.

4. Kupplungsaggregat nach einem der Ansprüche 1 bis 3 **dadurch gekennzeichnet, dass** ein hydraulisches Betätigungssystem (44) zum Verlagern des Betätigungselements (34, 40) in axialer Richtung vorgesehen ist, wobei das Betätigungssystem (44) einen in einem Zylinder (48, 50) geführten Kolben (52, 58) zum Einleiten einer von dem Betätigungssystem (44) aufgebrachten Betätigungskraft in das Betätigungselement (34, 40) über ein insbesondere als Schrägkugellager ausgebildetes Einrücklager (54, 60) aufweist, wobei das Betätigungssystem (44) eine an einem den Zylinder (48, 50) ausbildenden Zylindergehäuse (46) und dem Einrücklager (54, 60) abgestützte Vorlastfeder (56, 62) zum Drücken des Einrücklagers (54, 60) gegen das Betätigungselement (34, 40) aufweist.

5. Kupplungsaggregat nach einem der Ansprüche 1 bis 4 **dadurch gekennzeichnet, dass** ein Betätigungssystem (44) zum Verlagern des Betätigungselements (34, 40) in axialer Richtung vorgesehen ist, wobei das Kupplungsgehäuse (12), insbesondere ein getriebeseitiger Kupplungsdeckel (66) des Kupplungsgehäuses (12), über ein Deckellager (68) an dem Betätigungssystem (44) gelagert ist, wobei das Kupplungsgehäuse (12) auf einem Radius R_{D} an dem Deckellager (68) anliegt und der Rampenring (74, 84) auf einem Radius R_{K} an dem relativ zum Rampenring (74, 84) verlagerbaren Betätigungselement (34, 40) oder an der relativ zum Rampenring (74, 84) verlagerbaren Anpressplatte (36, 42) oder an dem relativ zum Rampenring (74, 84) verlagerbaren Kupplungsgehäuse (12) anschlagbar ist, wobei 1,00 ≤ R_{K}/R_{D} ≤ 2,00, insbesondere 1,05 ≤ R_{K}/R_{D} ≤ 1,40, vorzugsweise 1,08 ≤ R_{K}/R_{D} ≤ 1,20 und besonders bevorzugt 1,10 ≤ R_{K}/R_{D} ≤ 1,12 gilt.

6. Kupplungsaggregat nach einem der Ansprüche 1 bis 5 **dadurch gekennzeichnet, dass** das Betätigungselement (34, 40) ein Sensieröffnung (80) aufweist, wobei die Klemmfeder (76) einen in axialer Richtung durch die Sensieröffnung (80) hindurchragenden Steg (78) aufweist, wobei von dem Steg (78) in radialer Richtung ein Anschlag (82) zum Anschlagen an einer von dem Rampenring (74) weg weisenden Seite des Betätigungselements (34) absteht, wobei insbesondere der Anschlag (82) und der Steg (78) eine Clip-artige Einführungsschräge ausbilden.

7. Kupplungsaggregat nach einem der Ansprüche 1 bis 6 **dadurch gekennzeichnet, dass** eine erste Reibungskupplung (18) und einer zweite Reibungskupplung (20) vorgesehen sind, wobei die erste Reibungskupplung (18) eine von dem Kupplungsgehäuse (12) ausgebildete erste Gegenplatte (32) und eine von einem ersten Betätigungselement (34) verlagerbare erste Anpressplatte (36) und die zweite Reibungskupplung (20) eine von dem Kupplungsgehäuse (12) ausgebildete zweite Gegenplatte (38) und eine von einem zweiten Betätigungselement (40) verlagerbare zweite Anpressplatte (42) aufweisen, wobei eine erste Nachstelleinrichtung (70) zum Nachstellen eines verschleißbedingten Fehlabstands der ersten Anpressplatte (36) zur ersten Gegenplatte (32) und einer zweite Nachstelleinrichtung (72) zum Nachstellen eines verschleißbedingten Fehlabstands der zweiten Anpressplatte (42) zur zweiten Gegenplatte (38) vorgesehen sind.

8. Kupplungsaggregat nach Anspruch 7 **dadurch gekennzeichnet, dass** die erste Nachstelleinrichtung (70) und die zweite Nachstelleinrichtung (72) mit dem selben Bauteil (66) des Kupplungsgehäuses (12) zusammenwirken.

9. Kupplungsaggregat nach Anspruch 7 oder 8 **dadurch gekennzeichnet, dass** das erste Betätigungselement (34) eine erste Durchgangsöffnung (90) zum Hindurchführen eines an dem zweiten Rampenring (84) der zweiten Nachstelleinrichtung (72) anschlagbaren zweiten Abstützsteg (88) des zweiten Betätigungselements (40) und/oder das zweite Betätigungselement (40) eine zweite Durchgangsöffnung zum Hindurchführen eines an dem ersten Rampenring (74) der ersten Nachstelleinrichtung (70) anschlagbaren ersten Abstützsteg des ersten Betätigungselements (34) aufweist.

10. Kupplungsaggregat nach einem der Ansprüche 7 bis 9 **dadurch gekennzeichnet, dass** der erste Rampenring (74) der ersten Nachstelleinrichtung (70) und der zweite Rampenring (84) der zweiten Nachstelleinrichtung (72) an mindestens einem gemeinsamen Zentrierbolzen (94) zentriert sind.

## Claims

1. Clutch assembly, in particular double clutch, for coupling a drive shaft (16) of a motor vehicle engine to at least one transmission input shaft (26, 30) of a motor vehicle transmission, having
a clutch housing (12) for introducing or discharging a torque,
a counter-plate (32, 38) which is configured by the clutch housing (12),
a pressure plate (36, 42) which can be moved axially relative to the counter-plate (32, 38), for pressing a clutch plate (24, 28) in a frictionally locking manner between the counter-plate (32, 38) and the pressure plate (36, 42),
an actuating element (34, 40) which can be moved axially by an actuating system (44) which is, in particular, hydraulic, for moving the pressure plate (36, 42), the actuating element (38, 40) being configured, in particular, as a substantially rigid actuating pot for the substantially purely axial movement between an open position and a closed position,
an adjusting device (70, 72) for adjusting a wear-induced faulty spacing of the pressure plate (36, 42) from the counter-plate (32, 38), **characterized in that** the adjusting device (70, 72) has precisely one ramp ring (74, 84) which is supported on the clutch housing (12) directly or indirectly via a ramp system and is prestressed with an adjusting force in the circumferential direction, and one clamping spring (76, 86) which is connected to the clutch housing (12) directly or indirectly for clamping the ramp ring (74, 84) fixedly in terms of movement with the aid of a clamping force which is applied by the clamping spring (76, 86),
the actuating element (34, 40) or the pressure plate (36, 42) being supported in the open position on the ramp ring (74, 84) and, in the case of a sufficiently great stroke travel from the open position into the closed position, coming into contact with the clamping spring (76, 86) in order to reduce the clamping force on the ramp ring (74, 84).

2. Clutch assembly, in particular double clutch, for coupling a drive shaft (16) of a motor vehicle engine to at least one transmission input shaft (36, 30) of a motor vehicle transmission, having
a clutch housing (12) for introducing or discharging a torque,
a counter-plate (32, 38) which is configured by the clutch housing (12),
a pressure plate (36, 42) which can be moved axially relative to the counter-plate (32, 38), for pressing a clutch plate (24, 28) in a frictionally locking manner between the counter-plate (32, 38) and the pressure plate (36, 42),
an actuating element (34, 40) which can be driven by an actuating system (44) which is, in particular, hydraulic, for moving the pressure plate (36, 42), the actuating element (34, 40) being configured, in particular, as a substantially rigid actuating pot for the substantially purely axial movement between an open position and a closed position,
an adjusting device (70, 72) for adjusting a wear-induced faulty spacing of the pressure plate (36, 42) from the counter-plate (32, 38), **characterized in that** the adjusting device (70, 72) has precisely one ramp ring (74, 84) which is supported on the pressure plate (36, 42) or on the actuating element (34, 40) directly or indirectly via a ramp system and is prestressed with an adjusting force in the circumferential direction, and one clamping spring (76, 86) which is connected to the pressure plate (36, 42) or to the actuating element (34, 40) directly or indirectly for clamping the ramp ring (74, 84) fixedly in terms of movement with the aid of a clamping force which is applied by the clamping spring (76, 86),
the clutch housing (12) being supported in the open position on the ramp ring (74, 84) and, in the case of a sufficiently great stroke travel from the open position into the closed position, coming into contact with the clamping spring (76, 86) in order to reduce the clamping force on the ramp ring (74, 84).

3. Clutch assembly according to Claim 1 or 2, **characterized in that** a hydraulic actuating system (44) is provided for moving the actuating element (34, 40) in the axial direction, the actuating system (44) having a piston (52, 58) which is guided in a cylinder (48, 50) for introducing an actuating force which is applied by the actuating system (44) into the actuating element (34, 40), the cylinder (48, 50) communicating hydraulically with an equalizing device for pressure equalization within the cylinder (48, 50) in an adjusted open position.

4. Clutch assembly according to one of Claims 1 to 3, **characterized in that** a hydraulic actuating system (44) is provided for moving the actuating element (34, 40) in the axial direction, the actuating system (44) having a piston (52, 58) which is guided in a cylinder (48, 50) for introducing an actuating force which is applied by the actuating system (44) into the actuating element (34, 40) via an engagement bearing (54, 60) which is configured, in particular, as an angular-contact ball bearing, the actuating system (44) having a preload spring (56, 62) which is supported on a cylinder housing (46), forming the cylinder (48, 50), and the engagement bearing (54, 60), for pressing the engagement bearing (54, 60) against the actuating element (34, 40).

5. Clutch assembly according to one of Claims 1 to 4, **characterized in that** an actuating system (44) is provided for moving the actuating element (34, 40) in the axial direction, the clutch housing (12), in particular a transmission-side clutch cover (66) of the clutch housing (12), being mounted via a cover bearing (68) on the actuating system (44), the clutch housing (12) bearing against the cover bearing (68) on a radius R_{D}, and it being possible for the ramp ring (74, 84) to bear on a radius R_{K} against the actuating element (34, 40) which can be moved relative to the ramp ring (74, 84) or against the pressure plate (36, 42) which can be moved relative to the ramp ring (74, 84) or against the clutch housing (12) which can be moved relative to the ramp ring (74, 84), wherein 1.00 ≤ R_{K}/R_{D} ≤ 2.00, in particular 1.05 ≤ R_{K}/R_{D} ≤ 1.40, preferably 1.08 ≤ R_{K}/R_{D} ≤ 1.20 and particularly preferably 1.10 ≤ R_{K}/R_{D} ≤ 1.12.

6. Clutch assembly according to one of Claims 1 to 5, **characterized in that** the actuating element (34, 40) has a sensing opening (80), the clamping spring (76) having a web (78) which protrudes in the axial direction through the sensing opening (80), a stop (82) for bearing against a side of the actuating element (34) which points away from the ramp ring (74) projecting in the radial direction from the web (78), the stop (82) and the web (78) forming, in particular, a clip-like insertion bevel.

7. Clutch assembly according to one of Claims 1 to 6, **characterized in that** a first friction clutch (18) and a second friction clutch (20) are provided, the first friction clutch (18) having a first counter-plate (32) which is configured by the clutch housing (12) and a first pressure plate (36) which can be moved by a first actuating element (34), and the second friction clutch (20) having a second counter-plate (38) which is configured by the clutch housing (12) and a second pressure plate (42) which can be moved by a second actuating element (40), a first adjusting device (70) being provided for adjusting a wear-induced faulty spacing of the first pressure plate (36) from the first counter-plate (32), and a second adjusting device (72) being provided for adjusting a wear-induced faulty spacing of the second pressure plate (42) from the second counter-plate (38).

8. Clutch assembly according to Claim 7, **characterized in that** the first adjusting device (70) and the second adjusting device (72) interact with the same component (66) of the clutch housing (12).

9. Clutch assembly according to Claim 7 or 8, **characterized in that** the first actuating element (34) has a first passage opening (90) for guiding through a second supporting web (88) of the second actuating element (40), which second supporting web (88) can bear against the second ramp ring (84) of the second adjusting device (72), and/or the second actuating element (40) has a second passage opening for guiding through a first supporting web of the first actuating element (34), which first supporting web can bear against the first ramp ring (74) of the first adjusting device (70).

10. Clutch assembly according to one of Claims 7 to 9, **characterized in that** the first ramp ring (74) of the first adjusting device (70) and the second ramp ring (84) of the second adjusting device (72) are centred on at least one common centring pin (94).

## Revendications

1. Ensemble d'embrayage, en particulier embrayage double, pour coupler un arbre d'entraînement (16) d'un moteur de véhicule automobile à au moins un arbre d'entrée de boîte de vitesses (26, 30) d'une boîte de vitesses de véhicule automobile, avec
un boîtier d'embrayage (12) pour appliquer ou supprimer un couple de rotation,
un contre-plateau (32, 38) formé par le boîtier d'embrayage (12),
un plateau de pression (36, 42) déplaçable axialement par rapport au contre-plateau (32, 38) pour le pressage par friction d'un disque d'embrayage (24, 28) entre le contre-plateau (32, 38) et le plateau de pression (36, 42),
un élément d'actionnement (34, 40) déplaçable axialement par un système d'actionnement (44), en particulier hydraulique, pour déplacer le plateau de pression (36, 42), dans lequel l'élément d'actionnement (38, 40) est configuré en particulier comme un pot d'actionnement essentiellement rigide pour le déplacement essentiellement purement axial entre une position ouverte et une position fermée,
un dispositif de réglage (70, 72) pour le rattrapage d'une distance erronée due à l'usure entre le plateau de pression (36, 42) et le contre-plateau (32, 38), **caractérisé en ce que**
le dispositif de réglage (70, 72) présente exactement un anneau de rampe (74, 84) appuyé directement ou indirectement sur le boîtier d'embrayage (12) par un système de rampe et précontraint en direction périphérique avec une force de réglage et un ressort de serrage (76, 86) relié directement ou indirectement au boîtier d'embrayage (12) pour le serrage stationnaire de l'anneau de rampe (74, 84) à l'aide d'une force de serrage appliquée par le ressort de serrage (76, 86),
dans lequel l'élément d'actionnement (34, 40) ou le plateau de pression (36, 42) est dans la position ouverte appuyé sur l'anneau de rampe (74, 84) et, dans le cas d'une course suffisamment grande de la position ouverte à la position fermée, bute sur le ressort de serrage (76, 86) afin de diminuer la force de serrage sur l'anneau de rampe (74, 84).

2. Ensemble d'embrayage, en particulier embrayage double, pour coupler un arbre d'entraînement (16) d'un moteur de véhicule automobile à au moins un arbre d'entrée de boîte de vitesses (36, 30) d'une boîte de vitesses de véhicule automobile, avec
un boîtier d'embrayage (12) pour appliquer ou supprimer un couple de rotation,
un contre-plateau (32, 38) formé par le boîtier d'embrayage (12),
un plateau de pression (36, 42) déplaçable axialement par rapport au contre-plateau (32, 38) pour le pressage par friction d'un disque d'embrayage (24, 28) entre le contre-plateau (32, 38) et le plateau de pression (36, 42),
un élément d'actionnement (34, 40) actionnable par un système d'actionnement (44), en particulier hydraulique, pour déplacer le plateau de pression (36, 42), dans lequel l'élément d'actionnement (34, 40) est configuré en particulier comme un pot d'actionnement essentiellement rigide pour le déplacement essentiellement purement axial entre une position ouverte et une position fermée,
un dispositif de réglage (70, 72) pour le rattrapage d'une distance erronée due à l'usure entre le plateau de pression (36, 42) et le contre-plateau (32, 38), **caractérisé en ce que**
le dispositif de réglage (70, 72) présente exactement un anneau de rampe (74, 84) appuyé directement ou indirectement sur le plateau de pression (36, 42) ou sur l'élément d'actionnement (34, 40) par un système de rampe et précontraint en direction périphérique avec une force de réglage et un ressort de serrage (76, 86) relié directement ou indirectement au plateau de pression (36, 42) ou à l'élément d'actionnement (34, 40) pour le serrage stationnaire de l'anneau de rampe (74, 84) à l'aide d'une force de serrage appliquée par le ressort de serrage (76, 86),
dans lequel le boîtier d'embrayage (12) est dans la position ouverte appuyé sur l'anneau de rampe (74, 84) et, dans le cas d'une course suffisamment grande de la position ouverte à la position fermée, bute sur le ressort de serrage (76, 86) afin de diminuer la force de serrage sur l'anneau de rampe (74, 84).

3. Ensemble d'embrayage selon la revendication 1 ou 2, **caractérisé en ce qu'**il est prévu un système d'actionnement hydraulique (44) pour déplacer l'élément d'actionnement (34, 40) en direction axiale, dans lequel le système d'actionnement (44) présente un piston (52, 58) guidé dans un cylindre (48, 50) pour appliquer une force d'actionnement produite par le système d'actionnement (44) à l'élément d'actionnement (34, 40), dans lequel le cylindre (48, 50) est en communication hydraulique avec un dispositif de compensation pour la compensation de pression à l'intérieur du cylindre (48, 50) dans une position ouverte réglée.

4. Ensemble d'embrayage selon l'une quelconque des revendications 1 à 3, **caractérisé en ce qu'**il est prévu un système d'actionnement hydraulique (44) pour déplacer l'élément d'actionnement (34, 40) en direction axiale, dans lequel le système d'actionnement (44) présente un piston (52, 58) guidé dans un cylindre (48, 50) pour appliquer une force d'actionnement produite par le système d'actionnement (44) à l'élément d'actionnement (34, 40) au moyen d'un palier d'embrayage (54, 60) réalisé en particulier sous forme de roulement à billes oblique, dans lequel le système d'actionnement (44) présente un ressort de pré-charge (56, 62) appuyé sur un boîtier de cylindre (46) formant le cylindre (48, 50) et sur le palier d'embrayage (54, 60) pour pousser le palier d'embrayage (54, 60) contre l'élément d'actionnement (34, 40).

5. Ensemble d'embrayage selon l'une quelconque des revendications 1 à 4, **caractérisé en ce qu'**il est prévu un système d'actionnement (44) pour déplacer l'élément d'actionnement (34, 40) en direction axiale, dans lequel le boîtier d'embrayage (12), en particulier un couvercle d'embrayage (66) du boîtier d'embrayage (12) côté boîte de vitesses, est monté par un palier de couvercle (68) sur le système d'actionnement (44), dans lequel le boîtier d'embrayage (12) s'applique sur un rayon R_{D} sur le palier de couvercle (68) et l'anneau de rampe (74, 84) peut buter sur un rayon R_{K} sur l'élément d'actionnement (34, 40) déplaçable par rapport à l'anneau de rampe (74, 84) ou sur le plateau de pression (36, 42) déplaçable par rapport à l'anneau de rampe (74, 84) ou sur le boîtier d'embrayage (12) déplaçable par rapport à l'anneau de rampe (74, 84), dans lequel on a 1,00 ≤ R_{K}/R_{D} ≤ 2,00, en particulier 1,05 ≤ R_{K}/R_{D} ≤ 1,40, de préférence 1,08 ≤ R_{K}/R_{D} ≤ 1,20 et de préférence encore 1,10 ≤ R_{K}/R_{D} ≤ 1,12.

6. Ensemble d'embrayage selon l'une quelconque des revendications 1 à 5, **caractérisé en ce que** l'élément d'actionnement (34, 40) présente une ouverture de détection (80), dans lequel le ressort de serrage (76) présente une branche (78) passant en direction axiale à travers l'ouverture de détection (80), dans lequel une butée (82) est saillante en direction radiale sur la branche (78) afin de buter contre un côté de l'élément d'actionnement (34) orienté à l'opposé de l'anneau de rampe (74), dans lequel en particulier la butée (82) et la branche (78) forment une rampe d'introduction de type à déclic.

7. Ensemble d'embrayage selon l'une quelconque des revendications 1 à 6, **caractérisé en ce qu'**il est prévu un premier embrayage à friction (18) et un second embrayage à friction (20), dans lequel le premier embrayage à friction (18) présente un premier contre-plateau (32) formé par le boîtier d'embrayage (12) et un premier plateau de pression (36) déplaçable par un premier élément d'actionnement (34) et le second embrayage à friction (20) présente un second contre-plateau (38) formé par le boîtier d'embrayage (12) et un second plateau de pression (42) déplaçable par un second élément d'actionnement (40), dans lequel il est prévu un premier dispositif de réglage (70) pour le rattrapage d'une distance erronée due à l'usure entre le premier plateau de pression (36) et le premier contre-plateau (32) et un second dispositif de réglage (72) pour le rattrapage d'une distance erronée due à l'usure entre le second plateau de pression (42) et le second contre-plateau (38).

8. Ensemble d'embrayage selon la revendication 7, **caractérisé en ce que** le premier dispositif de réglage (70) et le second dispositif de réglage (72) coopèrent avec le même composant (66) du boîtier d'embrayage (12) .

9. Ensemble d'embrayage selon la revendication 7 ou 8, **caractérisé en ce que** le premier élément d'actionnement (34) présente une première ouverture de passage (90) pour le passage d'une seconde branche d'appui (88) du second élément d'actionnement (40) pouvant buter contre le second anneau de rampe (84) du second dispositif de réglage (72) et/ou le second élément d'actionnement (40) présente une seconde ouverture de passage pour le passage d'une première branche d'appui du premier élément d'actionnement (34) pouvant buter contre le premier anneau de rampe (74) du premier dispositif de réglage (70).

10. Ensemble d'embrayage selon une des revendications 7 à 9, **caractérisé en ce que** le premier anneau de rampe (74) du premier dispositif de réglage (70) et le second anneau de rampe (84) du second dispositif de réglage (72) sont centrés sur au moins un axe de centrage commun (94).
